# EUROPEAN PATENT APPLICATION

(11) **EP 4 548 988 A1**
(43) Date of publication of application: **07.05.2025**
(21) Application number: 24204757.9
(22) Date of filing: 04.10.2024
(51) Int. Cl.: A63F 13/47

(54) **METHODS AND DEVICES FOR MEMORY MANAGEMENT**

(30) Priority: 31.10.2023 GB 202316653
(71) Applicant: Sony Interactive Entertainment Inc., Tokyo 108-0075 (JP)
(72) Inventor: COCKRAM, Philip, London, W1F 7LP (GB)
(74) Representative: D Young & Co LLP

(57) **Abstract**

A method of memory management for a video game, the method comprising the steps of: loading a first asset into a memory; determining a likelihood of a respective other asset from a plurality of other assets being used within a predetermined period of time from the first asset being loaded into the memory; identifying one or more of the other assets in dependence upon the determined likelihood of a respective other asset; and preloading the one or more identified assets into the memory in response to the first asset being loaded into the memory.

## Description

### Field of Invention

The present invention relates to methods and devices for memory management.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

As processing speeds and display technologies have improved, users' expectations of rendering capabilities have likewise increased. Meanwhile, as rendering capabilities increase, some hardware requirements may not be able to keep up with the increased capabilities, which may result in a bottleneck in rendering capabilities.

It is in this context that the present disclosure arises.

### Summary of the Invention

In a first aspect, a method of memory management for a video game is provided in claim 1.

In another aspect, a machine learning model for memory management for a video game is provided in claim 11.

In another aspect, a processing device for memory management for a video game is provided in claim 15.

Further respective aspects and features of the invention are defined in the appended claims.

### Brief Description of the Drawings

Embodiments of the present invention will now be described by way of example with reference to the accompanying drawings, in which:
- Figure 1 schematically illustrates an example entertainment system;
- Figure 2 schematically illustrates an example method; and
- Figure 3 schematically illustrates an example processing device.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

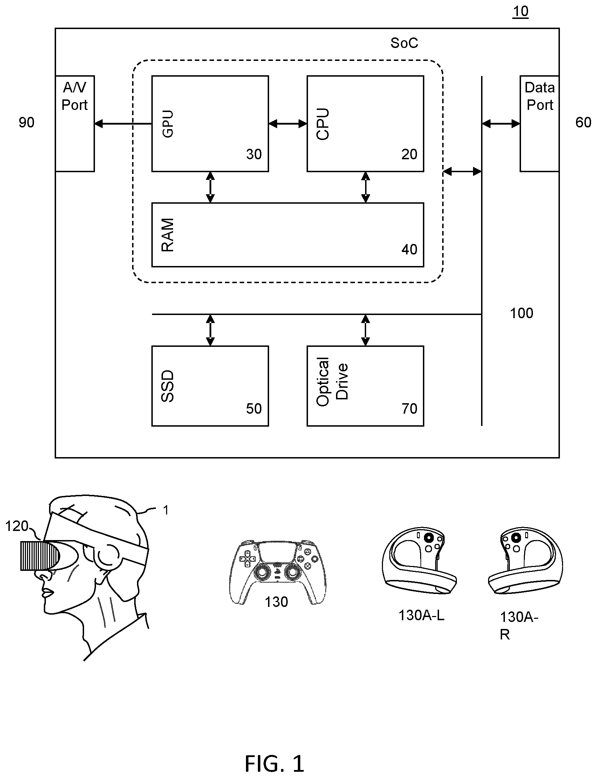

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1. Interaction with the system is typically provided using one or more handheld controllers 130, and/or one or more VR controllers (130A-L,R) in the case of the HMD.

As noted above, an entertainment system, such as the entertainment system 10, may comprise RAM, such as RAM 40. Additionally, a GPU may also comprise dedicated RAM, which is sometimes referred to as video-RAM or VRAM. VRAM is used by the GPU for storing data including image data and texture data to be used in rendering and displaying images.

As processing speeds and display technologies have improved, users' expectations of rendering capabilities have likewise increased. Meanwhile, as rendering capabilities increase, some hardware requirements may not be able to keep up with the increased capabilities, which may result in a bottleneck in rendering capabilities.

When performing processing for a video game, one such bottleneck may be a limited bandwidth and/or large latency for loading assets into a memory (such as a RAM or VRAM). Assets may include any type of data that can be loaded into memory for performing processing for a video game, such as textures, meshes, maps, sound effects, etc. Additionally, an asset may be data representative of or data used for rendering an in-game object, portion of a virtual environment or a non-player character (NPC). In this case, such an asset may comprise multiple types of data such as texture data and mesh data.

Notably, whilst memory performance (e.g. speed and response times) has steadily increased over time, it has done so at a slower rate in comparison to the performance increases in processor speeds. However, a memory stores the data that a processor reads/writes when performing processor operations. Therefore, a processor will not be able to perform optimally if it is waiting for data to read/written to the memory, which results in the processor not performing processor operations whilst waiting for data, which is undesirable.

Therefore, it is desirable to reduce memory latency when performing processing of video games.

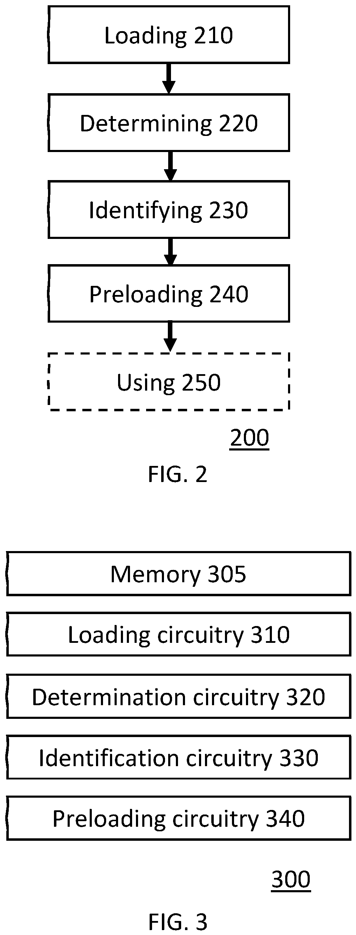

Accordingly, turning now to figure 2, a method 200 for performing memory management for a video game is provided in accordance with embodiments of the present disclosure.

The method 200 comprises a step of loading 210 a first asset into a memory.

As noted above, the first asset may be any type of data that can be loaded into memory for performing processing for a video game such as textures (or even texture data of, and/or identifying, a given level of a mip-map of a texture), meshes, maps, sound effects, data representative of or data used for rendering in-game objects, data representative of or data used for rendering a portion of a virtual environment, data representative of or data used for rendering an NPC, etc. The first asset may be loaded from a storage device such as an external or internal hard drive, or an external or internal solid state drive. Alternatively, the first asset may be downloaded or streamed into the memory via a network such as the internet.

The method comprises a step of determining 220 a likelihood of a respective other asset from a plurality of other assets being used within a predetermined period of time from the first asset being loaded into memory. The method further comprises a step of identifying 230 one or more of the other assets in dependence upon the determined likelihood of a respective other asset; and a step of preloading 240 the one or more identified assets into the memory in response to the first asset being loaded into the memory. Each of these steps will now be discussed in turn.

The other assets may also be any type of data that can be loaded into memory for performing processing for a video game. In some embodiments, each asset in the plurality of other assets may be the same type of asset as the first asset. For example, if the first asset is a texture, each asset in the plurality of other assets may also be a texture. Alternatively, in some embodiments of the present disclosure, the plurality of other assets may comprise, or even consist of, assets of a different type to the first asset.

An asset being used may include the asset being processed in processor operations for the video game. However, in some embodiments of the present disclosure, an asset may alternatively or additionally be considered to be used when the asset is loaded (but not preloaded in accordance with the later described techniques) into the memory.

The predetermined period of time may be chosen by a developer or hardware designer. In some cases, the predetermined period of time may be dependent upon an amount of available memory or memory bandwidth, and/or a total amount of memory. For example, the predetermined period of time may be larger when there is a larger amount of available memory or memory bandwidth in comparison to the predetermined period of time in a case where there is a smaller amount of available memory or memory bandwidth. This may advantageously increase the determined likelihood for a given other asset (which may in turn increase the chance that the given other asset will be preloaded) in response to an increase in the amount of available memory or memory bandwidth.

In some cases, the predetermined period of time may be the same for each of the other assets. Alternatively, the predetermined period of time may vary for a respective other assets. For example, the predetermined period of time may be different for each type of other asset, such as one predetermined period of time for textures, another predetermined period for meshes, etc. In this case, the different predetermined period of time used for each asset may also depend upon what type of asset the first asset is. For example, other assets that are the same type of asset as the first asset may have a longer predetermined period of time in comparison to other assets of a different type. This may be useful in a case where processing for the other types of asset may be performed in parallel with processing for the first asset, whilst processing for the first asset's type is performed in sequentially. Therefore, other assets may be more likely to be related to the first asset if they are used within a shorter period of time (i.e. parallel with the first asset) if they are of a type different to the first asset, whilst other assets of a type that is the same as the first asset may be more likely to be related to the first asset if they are used within a longer period of time (i.e. sequentially after the first asset).

Alternatively, or in addition, in some embodiments of the present disclosure, the predetermined period of time for a respective other asset may be dependent upon a size of the respective other asset. For example, the predetermined period of time may be shorter for a larger asset in comparison to the predetermined period of time for a smaller asset. Therefore, a larger asset's likelihood will be determined based on a shorter period of time than the period of time used for determining the smaller asset's likelihood. Therefore, a large asset may only be identified for preloading 240 if it is likely that the large asset will be used within a short period of time, whilst a small asset may be identified for preloading 240 when it is likely to be used with a period of time larger than the short period of time. Therefore, in these embodiments, smaller assets will generally have a higher likelihood in comparison to large assets. However, if a given large other asset is frequently used after loading the first asset into memory within the shorter period of time, the given large asset will still be given a high likelihood.

In some embodiments of the present disclosure, the likelihood of a respective other asset may be determined in dependence upon a proportion, where the respective other asset has previously been used within the predetermined period of time from the first asset previously being loaded into the memory, of a total number of times the first asset is loaded into memory.

As an illustrative example, data may be recoded after each time the first asset is loaded into memory, the data may be indicative of what other assets are used (or loaded into the memory) within the predetermined period of time (e.g. 1 second in this example) from when the first asset is loaded into memory. The recorded data may therefore be indicative of the above described proportion.

For example, if the first asset has previously been loaded in the memory a total of ten times, the recorded data may indicate that a second asset (i.e. a respective other asset) is used within 1 second of the first asset being loaded for eight of the total ten times the first asset is loaded into memory. Meanwhile, the recorded data may indicate that a third asset (i.e. another respective asset) is used within 1 second of the first asset being loaded for three of the total ten times the first asset is loaded into memory. In some embodiments, the determined likelihood of a respective asset may simply be the above described proportion of the respective asset. In this example, the determined likelihood may be 80% for the second asset and may be 30% for the third asset.

However, it will be appreciated that other techniques for determining the likelihood (with or without the above described proportion) may alternatively or additionally be used, as will be described elsewhere herein. For example, the determined likelihood may be calculated as a function of the above described proportion.

It will also be appreciated that more data may be recorded each time the first asset is loaded into memory. However, in some optional cases, only data recorded for the N most recent occurrences of the first asset being loaded into memory may be retained (e.g. only data from the 10, 20, 50, 100 or any other suitable number of most recent times the first asset being loaded into memory is retained). In these cases, when the first asset is loaded into the memory and the recorded data already comprises the N most recent occurrences of the first asset being loaded into memory, the oldest entry in the recorded data may be overwritten to store the new recorded data.

As previously noted, the method 200 comprises a step of identifying 230 one or more of the other assets in dependence upon the determined likelihood of a respective other asset.

For example, in some embodiments of the present disclosure, the step of identifying 230 comprises identifying a respective one of the other assets if the determined likelihood of the respective other asset is above a threshold likelihood. For example, the threshold likelihood may be set by a developer, or based on particular hardware constraints.

As an illustrative example, the threshold likelihood may be set at 80% (although it will be appreciated that any other value may be selected as the threshold likelihood). In this example, any of the other assets that have a determined likelihood at or above 80% will be identified during the identifying step 230, whilst the other assets whose respective determined likelihood is below 80% will not be identified.

Alternatively, the step of identifying 230 may comprise identifying N other assets with the highest determined likelihood from the plurality of other assets, where N is an integer denoting the total number of assets to be identified. In some cases, the other asset with the highest determined likelihood may be identified first, then the other asset with the second highest likelihood may be identified, and so on until the N assets have been identified. The number (N) of assets to be identify may be predetermined by a developer or a user. Alternatively, the number (N) may be determined based on an available amount of memory or memory bandwidth, with a larger value of N being used for a larger amount of available memory or memory bandwidth in comparison to a case where a smaller value of N is used for a smaller amount of memory or memory bandwidth. The number (N) may also be associated with the first asset. For example, some assets may be related to a large number of assets, so if those assets are the first asset, they may be associated with a relatively higher value for N.

It will be appreciated that the above two techniques for the identifying 230 step may also be used in combination. For example, the step of identifying may comprise identifying up to N other assets with the highest determined likelihood from the plurality of other assets if the determined likelihood of a respective one of the other assets is above a threshold likelihood. In this case, if more than N other assets' respective determined likelihood is above the threshold, only the N assets with highest likelihood will be identified. Alternatively, if less than N other assets have a determined likelihood above the threshold, all of (and only) the other assets whose respective determined likelihood is above the threshold likelihood will be identified.

Alternatively, or in addition, the step of identifying 230 may comprise identifying the other assets in decreasing order of likelihood (i.e. identifying the other asset with the highest determined likelihood first, then identifying the other asset with the second highest likelihood, and so on) until the total size of the identified assets is at or above a threshold size (or until the identification of the next other asset would result in the total size of the identified assets to be above the threshold size). The threshold size may be dependent upon an amount of available memory (e.g. 10% of available memory).

In some cases, if the identification of the next other asset would result in the total size of the identified assets to be above the threshold size, that other asset may be skipped (i.e. not identified). However, the identification of other assets may proceed to the following (i.e. next lowest likelihood) other asset that of a size less than the difference between the threshold size and the total size of the already identified assets (although, in some cases, the following other asset may still need are determined likelihood above a threshold likelihood).

As an illustrative example, the table below provides an example of five other assets (A-E), their respective sizes (in MB), and their respective determined likelihoods (as a percentage) for the same first asset. The assets are presented in order of decreasing likelihood.

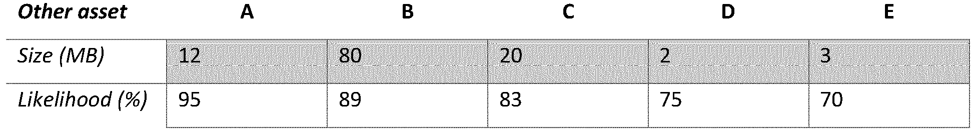

Consider a case where assets are identified in order of decreasing likelihood, the total size of the identified assets cannot exceed 100MB, assets need a likelihood at or above 75% to be identified, and if an asset would cause the total size of the identified assets to exceed the 100MB threshold if it were identified, it will not be identified but smaller assets may still be identified if they meet these criteria.

In this case, asset A will be identified first because it is the asset with the highest likelihood and meets all of the above criteria. Asset B will be identified second because it is the asset with the second highest likelihood and meets the above criteria - this bring the total size of identified assets to 92MB (12MB + 80MB). Asset C is the asset with the third highest likelihood. However, even though asset C exceeds the likelihood threshold criteria of 75%, asset C will not be identified because, if asset C were identified, the total size of identified assets would be 112MB (12MB + 80MB + 20MB), which would exceed the total size threshold.

Whilst the identification step may stop after asset C is not identified, in some cases, it may continue. In these cases, asset D (having the fourth highest likelihood) will be identified (as the third asset to be identified) because asset D has a likelihood at the likelihood threshold and the total size of the identified assets would be 94MB, which does not exceed the total size threshold. Asset E, like asset C, would not be identified. Even though asset E would not cause the total size of the identified assets to exceed the total size threshold, asset E does not meet the likelihood threshold of 75%.

However, optionally, in some cases, the threshold likelihood may be dependent upon a size of a respective other asset. In these cases, a smaller threshold likelihood may be used for a smaller other asset in comparison to a threshold used for a larger other asset. Therefore, the number of potential assets identified may advantageously be increase without increasing a memory footprint of the identified assets.

Returning to the above example, assets smaller than 5MB may only need to meet a threshold likelihood of 50%. In this case, asset E may also be identified. Additionally, assets larger than 50M B, which is half the total size threshold (although other values may alternatively or additionally be used), may need to meet a threshold likelihood of 90%. In this case, asset B would not be identified, since it would not meet this higher threshold, which would be required due to the size of asset B exceeding 50MB. However, if asset B is not identified, asset C could then be identified since asset A and C together would not exceed the total size threshold. Furthermore, in this case, assets A, B, D and E would have a combined size of 37MB. Therefore, additional assets (not shown in the table) could also be identified if they meet the criteria.

Of course, it will be appreciated that any one or more of the criteria in this example may be used on their own or in combination in accordance with some embodiments of the present disclosure.

It will be appreciated that assets may have different sizes either in terms of their respective memory footprints or their physical size in a virtual environment. Optionally, in some embodiments of the present disclosure, only a predetermined number of other assets in a given size range and/or asset type may be identified for a given asset being loaded into the memory. It will be appreciated that the larger a type of given asset is, the less likely it will be that a large number of that type of asset will be used in any given region of a virtual environment due to the fact that it would be more difficult to accommodate a large number of such assets relative to a smaller asset.

Similarly, consideration of the context in which an asset is to be rendered may be considered may be used to vary the pre-loading process. Such a consideration may be based upon an expected number of an asset to be rendered based upon the number of a corresponding object that is likely to be present within the virtual environment.

For example, if the given asset being loaded into a memory is representative of a house in a virtual environment, other assets each representative of a bed may have a determined likelihood high enough for those other assets to be identified for preloading because houses generally comprise at least one bed. However, there may be hundreds of other assets that are representative of beds and it would be improbable for a house to comprise that many beds. Therefore, only a predetermined number of beds may be identified for preloading for the given asset being loaded into the memory. The predetermined number may be dependent upon the particular house represented by the given asset. For example, for a three bedroom house the predetermined number of beds to identify may be three based upon an expectation of one bed per bedroom being a typical number. In some cases, the predetermined number may be stored in a look-up table (LUT). Meanwhile, for a smaller type of other asset (such as books), or assets which are expected to be present in greater quantities, a larger predetermined number may be used (in comparison to the number used for beds).

As previously noted, the method 200 comprises a step of preloading 240 the one or more identified assets into the memory in response to the first asset being loaded into the memory. The preloading 240 may be performed in the same manner that has already been described in regards to the step of loading 210 the first asset into memory. However, when a respective other asset is preloaded using the techniques described herein, the preloaded respective other asset may not be used during processing of the video game because the respective asset is preloaded in dependence upon a likelihood of it being used. If a respective preloaded asset is not used (for example, the respective preloaded asset has not been used within the predetermined period of time for the respective asset from the first asset being loaded into the memory), the memory addresses or address range the respective preloaded asset is stored at may be set as available, which will enable the respective other asset to be overwritten by other data.

In some embodiments, spare memory or memory bandwidth capacity (i.e. memory or memory bandwidth not being used by the normal processing) may be used with the method 200. Therefore, the present method 200 may advantageously reduce bottlenecks by predicting what assets may be needed during processing of the video game and preloading the predicted assets, which may reduce occurrences of memory bandwidth being overloaded by needing to load too many assets into memory at any one time, which may reduce a processor not being able to perform optimally due to waiting for data to read/written to the memory.

Optionally (as indicated by the dotted outline in figure 2), in some embodiments of the present disclosure, the method further comprises a step of using 250 at least one of the preloaded assets during processing of the video game.

In some embodiments of the present disclosure, the first asset is loaded into a first portion of the memory and the one or more identified assets are preloaded into a second portion of the memory. Optionally, the second portion of the memory may be adjacent to the first portion of the memory, which may improve memory latency when the processor reads the data from the portion of the memory and then reads the data from the second portion of the memory.

It will be appreciated that the step of determining 220 and/or the step of identifying 230 do not need to be performed in response to the step of loading 210 the first asset, but may instead be performed prior to the first asset being loaded. In some cases, the steps of determining 220 and identifying 230 may be performed during development of the video game based on data recorded during development of the video game. Data indicative of the result of the identifying 230 step may then be generated and packaged with the video game. For example, the identification data may be data indicative of the identified other assets that are associated with a respective first asset. The identification data may be provided in any suitable form. For example, it may be provided as a look-up table (LUT). In this case, when a respective first asset is loaded into memory, relevant entry in the LUT may be accessed in order to identify/preload one or more of the other assets with minimal delay from the loading of the respective first asset.

Optionally, in some embodiments of the present disclosure, the likelihood of a respective one of the other assets being used within the predetermined period of time from the first asset being loaded into the memory is determined in dependence upon data representative of a current gameplay state. For example, the data representative of the current gameplay state may be used as a context to determine or further refine the likelihood.

As an illustrative example, a first asset may be used in a plurality of locations in a virtual environment of the video game. It may be more likely for a given other asset to be used within a predetermined period of time after the first asset has been loaded into memory for a first location in the virtual environment in comparison to a case where the first is loaded into memory for a second virtual location. Therefore, data representative of the current gameplay state may be used to determine the likelihood. In this example, if the data representative of the current gameplay state is indicative of a user being at the first location in the virtual environment, a higher likelihood will be determined in comparison to a case where the data representative of the current gameplay state is indicative of the user being at the second location in the virtual environment.

Similarly, considering the example of the first asset being a tree, the associated other assets may have a likelihood based upon geographical or time constraints within the virtual environment. For instance, the same tree may be present in a forest or at a cliff-edge; in either case, different bird species may be present due to natural habitats, and as such the likelihood of assets corresponding to these different species may be varied accordingly based upon the location. Similarly, at night a tree may be more likely to be rendered in association with bats or nocturnal birds, rather than diurnal birds. Proximity to a user (or the viewpoint position, as a proxy for the user's position within the virtual environment) may be considered - assets that are too small to be seen at distance may not be rendered while the user is further away, which would change the likelihood accordingly. Similarly, some birds may be considered to be more flighty than others, and as such the likelihood of assets representing these may decrease with a corresponding increase in user proximity (as the likelihood of the bird being present to require rendering is reduced). This can be particularly useful in games in which the same assets are reused between multiple levels or locations, as these may offer very different contextual usage of the assets.

Optionally, in some embodiments of the present disclosure, one or more of the assets may be streamed from a server via a network for the steps of loading and/or preloading. For example, a user may enter a region of a virtual environment and an asset for rendering the region of the virtual environment may be streamed from a server to a client device configured to render the region of the virtual environment. Therefore, the asset may be loaded into a memory of the client device by the streaming the asset to the client device from the server. In response to the asset being streamed to the client device, one or more identified other assets stored on the server, which may be identified in accordance with the techniques described elsewhere herein, may be streamed from the server to the client device to preload the one or more identified other assets into the memory of the client device.

In some embodiments of the present disclosure, the determination of the likelihood may further depend on a user action, a predicted user action, and/or an expected event within the virtual environment being rendered. For example, the first asset may an asset representative of an explosive barrel in a virtual environment (e.g. a mesh or texture of an explosive barrel), and a given one of the other assets may be representative of an explosion caused by the explosive barrel. In this case, the likelihood determined for the given other asset may be increased in response to a user action attacking the explosive barrel in the virtual environment, or a prediction of a user action to attack the explosive barrel.

For example, the likelihood may be increased at the initiation of an attack action proximate to the explosive barrel. Alternatively, the likelihood may be increased after each attack action performed on the explosive barrel, which may require a plurality of attack actions to detonate (where the likelihood may further increase after each subsequent attack action. Alternatively, or in addition, the likelihood may be increased based on a predication of a user action to attack the explosive barrel. For example, the user action may be predicted in dependence upon the proportion of other users that attack the explosive barrel in response to encountering the explosive barrel (the corpus of other users may optionally be restricted to only the other users will a similar behavioural profile to the user that the prediction is being made for). The user action may be alternatively or additionally be predicted in dependence upon previous user actions performed by the user that the prediction is being made for. For example, the likelihood may be determined to be higher in a first case, where the user attacks a high proportion of the explosive barrels they encounter, in comparison to a second case, where the user attacks a low proportion (in comparison to the first case) of the explosive barrels they encounter.

In some embodiments of the present disclosure, the step of determining 220 the likelihood of a respective other asset may comprise inputting data representative of the first asset into a machine learning model trained to determine the likelihood of a respective one of the other assets being used within the predetermined period of time from the first asset being loaded into the memory, in dependence upon the input data.

In some embodiments of the present disclosure, a machine learning model for memory management for a video game is provided in accordance with embodiments of the present disclosure.

The machine learning model is trained to determine, in dependence upon an input representative of a first asset, a likelihood, as an output, of a respective other asset from a plurality of other assets being used within a predetermined period of time from the first asset being loaded into a memory in dependence upon the input data.

For example, in some cases, the machine learning model may be trained using training data indicative of when respective assets are loaded into the memory. Such training data may be generated during gameplay of the video game. In some cases, the trained machine learning model may be used to determine likelihoods for assets that are not part of the training data. For example, the machine learning model may be trained to learn from the training data associations between assets based on features of the assets in the training data. In these cases, when encountering a new asset, the trained machine learning model may determine a likelihood for other assets based on features of the new asset that correspond to asset features learned during training.

In some embodiments of the present disclosure, a discriminative network may be utilised, in which the discriminative network is trained to determine a likelihood of a respective other asset from a plurality of other assets being used within a predetermined period of time from a first asset being loaded into a memory in dependence upon the input data representative of the first asset.

For example, the discriminative network may be trained using a database of when respective first assets were loaded into memory and what other assets were loaded into memory within a predetermined period of time of a respective first asset being loaded. In some cases, the database may additionally comprise a plurality respective first assets. Therefore, it will be appreciated that the database may comprise different respective first assets for different pluralities of other assets, different respective first assets for the same plurality of other assets, or any combination of the two.

Each respective first asset in in the database may comprise historical data for two or more other assets where a total amount of times (and/or the time taken for) a respective one of the other assets is used within a predetermined period of time in response to the first asset being loaded onto memory, or the proportion where a respective other asset is used (as has been described elsewhere herein), may, for example, be used to classify each of the other assets as "likely" or "not-likely" to be used within a predetermined period of time after the first asset is loaded into memory.

Other classifications for the likelihood in the database may also, or alternatively, be used such as a likelihood score, where a other assets classified by a numerical value that represents a probability of the other asset being used within a predetermined period of time after the first asset is loaded into memory.

It will be appreciated that the likelihood score (or rating) may be defined in a number of ways, as appropriate for a particular implementation. For example, a suitability score (or rating) can be determined in dependence upon a current gameplay state (which has been described elsewhere herein).

Therefore, in some embodiments of the present disclosure, the step of determining the likelihood of a respective other asset may comprise inputting the data representative of the current gameplay state into the machine learning model.

In some cases, the historical data may be indicative of an average relative proximity between two or more objects when used in a virtual environment. In these cases, the machine learning model may be trained to identify a relationship between the average relative proximity between two or more objects and a likelihood of a respective one of the two or more assets being used within a predetermined period of time from the another one of the two or more assets being loaded into the memory.

In some cases, the machine learning model may be trained to determine a likelihood for a given category of asset. For example, suitable categories of assets may include: user avatars; interactable objects; equippable items; small objects; large objects; scene boundaries; static scene objects (e.g. large furniture, walls); non-player characters (NPCs), which may be further categorised based on a general shape of NPC (e.g. humanoid or biped, animal or quadruped, monster, robot, etc.); etc.

The category of an asset may also be used to further refine the likelihood determination. As an example, consider a category of asset that is used for buildings in a virtual environment (e.g. assets representative of texture and/or mesh of a house would fall into this category). The categorisation may be further be refined based on whether a building is, for example, abandoned or inhabited. The determination of a likelihood for a respective other asset (such as furniture assets) may be further refined in dependence upon this categorisation. For example, it may be less likely for an abandoned building to contain furniture, so the likelihood determined for furniture assets may be less for an abandoned building than for an inhabited building.

Similarly, the categorisation of the furniture assets could be refined based on, for example, the material a given furniture asset is made of (e.g. fabric or metal). The determination of a likelihood my then be further refined in dependence upon this categorisation. For example, an inhabited building may be more likely to comprise fabric furniture and an abandoned building may be more likely to comprise metal furniture.

It will be appreciated that the classification of the likelihood of a respective other asset in the database may be variable in dependence upon gameplay state (as described elsewhere herein).

Of course, the likelihood score could be derived based upon consideration of a number of different parameters rather than only those parameters described above. In the example of using a discriminator, the discriminator may be trained without any explicit knowledge of which features of assets are considered to be indicative of likelihood for a given application - in such a case, an existing dataset may be provided that indicates what other assets would be have a high likelihood, and what other assets would have a low likelihood, of being used in response to a respective first asset being loaded in a memory. From this, the discriminator could be trained to derive which parameters are indicative of likelihood and therefore determine the likelihoods for other assets not included in the database.

Alternatively, or in addition, a reinforcement learning model may be used in which a reward is determined based upon whether one of the other assets is used is used/not when it is determined to have a high/low likelihood of being used.

For example, in a training phase of the reinforcement learning model, a reward function may provide rewards when the other assets that determined to have a high (or low) likelihood (of being used within a predetermined period of time from a respective first asset being loaded into a memory) are actually used (or are not used) within the predetermined period of time from the respective first asset being loaded into the memory during processing of the video game.

The training of models may be performed with any desired level of granularity in respect of the intended usage. For example, in some cases a model may be trained that is intended to be used to determine likelihoods for assets in a specific game, while in other cases the model may be trained so as to instead be used for assets for a series of games or an entire genre. Similarly, a model could be trained for a more specific purpose, such as for assets of a particular type.

Optionally, each of the respective first assets and associated pluralities of other assets that may be used as training inputs to the machine learning model may be associated with one or more tags. These tags can be used to characterise the input data set so as to increase the efficiency and/or effectiveness of the training process. These tags can be used to describe features of the assets such as a categorisation of what is represented by the asset (such as interactable/non-interactable objects), the source of the asset (e.g., the creator of the asset), etc. These tags can in some cases be used to identify one or more characteristics that may not be derivable from the assets themselves, or would not necessarily be easy to derive. Alternatively, or in addition, one or more tags may describe categories of assets such as "tree", "building", "NPC", "equippable", "castle", etc., and/or whether an asset is a texture, mesh, map, sound effect, etc.

As noted elsewhere herein, the training data may be generated from a different video game to the one being in which the machine learning model is to be used for; for example, some rudimentary ability to determine likelihoods for other assets may be provided from the training to enable 'out of the box' functionality. For a developer, a previously trained machine learning model may be accessible from a library associated with a graphics engine, and may be supplied with that engine and/or may come from previous projects used by the developer, including for example earlier games/applications in a series. Using earlier games in a series may enable the system to learn how to predict likelihoods for assets in dependence upon a specific look and feel of the series. The system can also learn from assets used for the current game application, so that the training may be iterative as the game/application is played by users.

Optionally, in some embodiments of the present disclosure, the training data may be recorded during gameplay of a plurality of users. Alternatively, the training data may be recoded during gameplay of a given user. In this case, the machine learning model may be trained for the given user. This may be advantageous, because the likelihood of a given other asset being used within a predetermined period of time from a first asset being loaded into a memory may be dependent upon an individual user's particular gameplay style.

While the above discussion has focused upon the use of a single trained model it may be considered advantageous to use a plurality of trained models. For instance, a first model may be used to predict likelihoods for a first type of other assets (such as textures), whilst a second model may be used to may be used to predict likelihoods for a second type of other assets (such as meshes).

This can be advantageous in that the use of two separate models can enable a more specific training for specific types of assets, which can improve the predicted likelihoods. Of course, more than two models could be used in a particular implementation - for instance, a third model could be used to for NPCs.

Whilst specific examples for the type of machine learning model have been given above, the machine learning model is not limited to these examples and any other appropriate type of machine learning model may be used.

Turning now to figure 3, in embodiments of the present disclosure, a processing device 300 for memory management for a video game is provided. The processing device 300 comprises: a memory 405; loading circuitry 310 configured to load a first asset into a memory; determination 320 circuitry configured to determine a likelihood of a respective other asset from a plurality of other assets being used within a predetermined period of time from the first asset being loaded into the memory; identification circuitry 330 configured to identify one or more of the other assets in dependence upon the determined likelihood of a respective other asset; and preloading circuitry 340 configured to preload the one or more identified assets into the memory in response to the first asset being loaded into the memory.

It is also considered that additional processing units may be provided as appropriate for a given implementation, such as a rendering unit which is configured to generate images for display using the first asset and (in the case that the preloaded assets are to be used) one or more of the preloaded assets as appropriate.

Modifications to the processing device 300 corresponding to the modifications described elsewhere herein will be apparent to the skilled person.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, the processing device 300 may be implemented on, for example, a server (not shown) or entertainment device 10.

In a summary embodiments of the present description, a method of training a machine learning model for memory management for a video game according to the present disclosure is provided.

Instances of these summary embodiments implementing the methods and techniques described herein (for example by use of suitable software instruction) are envisaged within the scope of the application.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of memory management for a video game, the method comprising the steps of:
loading a first asset into a memory;
determining a likelihood of a respective other asset from a plurality of other assets being used within a predetermined period of time from the first asset being loaded into the memory;
identifying one or more of the other assets in dependence upon the determined likelihood of a respective other asset; and
preloading the one or more identified assets into the memory in response to the first asset being loaded into the memory.

2. The method according to claim 1, in which
the step of determining the likelihood of a respective other asset comprises inputting data representative of the first asset into a machine learning model trained to determine the likelihood of a respective one of the other assets being used within the predetermined period of time from the first asset being loaded into the memory, in dependence upon the input data.

3. The method according to claim 2, in which
the machine learning model is trained using training data indicative of when respective assets are loaded into the memory.

4. The method according to claim 3, in which
the machine learning model is trained for a given user, and the training data is recorded during gameplay of the given user; or
the training data is recorded during gameplay of a plurality of users.

5. The method according to any one of the preceding claims, in which
the likelihood of a respective one of the other assets being used within the predetermined period of time from the first asset being loaded into the memory is determined in dependence upon data representative of a current gameplay state.

6. The method according to claim 5 when dependent upon claim 2, in which
the step of determining the likelihood of a respective other asset comprises inputting the data representative of the current gameplay state into the machine learning model.

7. The method according to any one of the preceding claims, in which
the likelihood of a respective other asset is determined in dependence upon a proportion, where the respective other asset has previously been used within the predetermined period of time from the first asset previously being loaded into the memory, of a total number of times the first asset is loaded into memory.

8. The method according to any one of the preceding claims, in which
the predetermined period of time for a respective other asset is dependent upon a size of the respective other asset.

9. The method according to any one of the preceding claims, in which
the step of identifying comprises identifying a respective one of the other assets if the determined likelihood of the respective other asset is above a threshold likelihood.

10. The method according to claim 9, in which
the threshold likelihood is dependent upon a size of the respective other asset.

11. A machine learning model for memory management for a video game, the machine learning model trained to determine, in dependence upon an input representative of a first asset, a likelihood, as an output, of a respective other asset from a plurality of other assets being used within a predetermined period of time from the first asset being loaded into a memory in dependence upon the input data.

12. A method of training a machine learning model according to the machine learning model of any one of claims 2-4, 6 and 11, and any one of claims 5 and 7-10 when dependent upon claim 2.

13. Computer software which, when executed by a computer, causes the computer to carry out the method of any one of claims 1-10 and 12.

14. A non-transitory machine-readable storage medium which stores computer software according to claim 13.

15. A processing device for memory management for a video game, the processing device comprising:
a memory;
loading circuitry configured to load a first asset into a memory;
determination circuitry configured to determine a likelihood of a respective other asset from a plurality of other assets being used within a predetermined period of time from the first asset being loaded into the memory;
identification circuitry configured to identify one or more of the other assets in dependence upon the determined likelihood of a respective other asset; and
preloading circuitry configured to preload the one or more identified assets into the memory in response to the first asset being loaded into the memory.
